# FASCICULE DE BREVET EUROPEEN

(11) **EP 2 795 196 B1**
(45) Date de publication et mention de la délivrance du brevet: **26.08.2015**
(21) Numéro de dépôt: 12813330.3
(22) Date de dépôt: 19.12.2012
(51) Int. Cl.: F24B 1/181, F24B 1/185, F24B 1/188, F24B 1/19, F24B 1/192, F24B 1/193, F24B 7/00, F23L 15/04, F24B 5/02

(54) **APPAREIL DE CHAUFFAGE A TRES HAUT RENDEMENT, DE TRES FAIBLE PROFONDEUR ET A VISION ETENDUE**
HEIZVORRICHTUNG MIT SEHR HOHER EFFIZIENZ, FLACHEM PROFIL UND GROSSEM SICHTBEREICH
HEATING APPARATUS HAVING VERY HIGH EFFICIENCY, A SHALLOW PROFILE AND A WIDE VIEW

(30) Priorité: 20.12.2011 EP 11194696
(43) Date de publication de la demande: 29.10.2014
(73) Titulaire: Cyris, Rudy, 5660 Couvin (BE)
(72) Inventeur: Cyris, Rudy, 5660 Couvin (BE)
(74) Mandataire: Pronovem
(86) Numéro de dépôt international: PCT/EP2012/076160
(87) Numéro de publication internationale: WO 2013/092718

(56) Documents cités:
- US-A- 4 349 009
- US-A- 4 736 730
- US-A- 5 113 843
- US-A- 5 320 086

## Description

### Objet de l'invention

La présente invention se rapporte au domaine des appareils de chauffage domestiques à combustible solide tel que bois, pellets, charbon, briquettes de lignite, etc. et à haut rendement. Ces appareils comportent dans leurs versions les plus performantes des moyens de préchauffage de l'air primaire alimentant la chambre de combustion.

### Etat de la technique

De tous temps, on a donné au poêle domestique un habillage rappelant les objets de la vie quotidienne, par exemple au moyen d'une forme inspirée d'un meuble ou d'une horloge. Ainsi, plusieurs générations de poêles se sont succédées avec une durée de vie d'au moins quarante ans chacune : le poêle à cloche, le poêle Franklin, le poêle céramique à étage, le poêle de type Godin, le poêle buffet, le poêle convecteur, le poêle en fonte, le poêle cheminée, etc. Actuellement, une nouvelle génération de poêles, celle des poêles en acier de style contemporain, supplante celle des poêles en fonte.

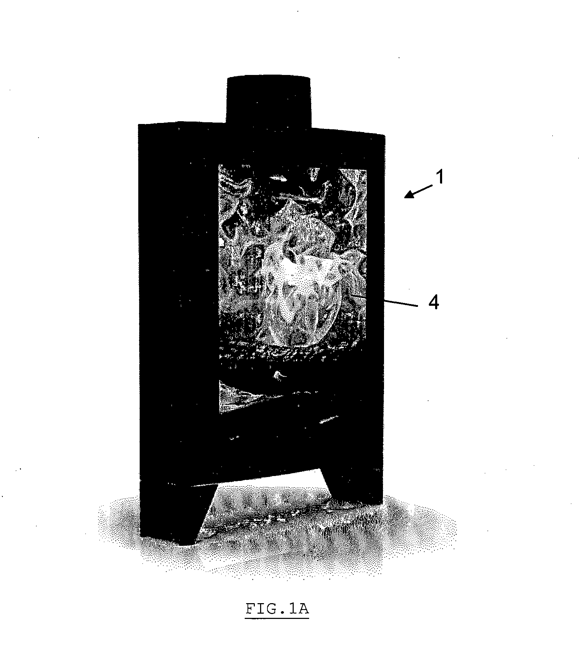

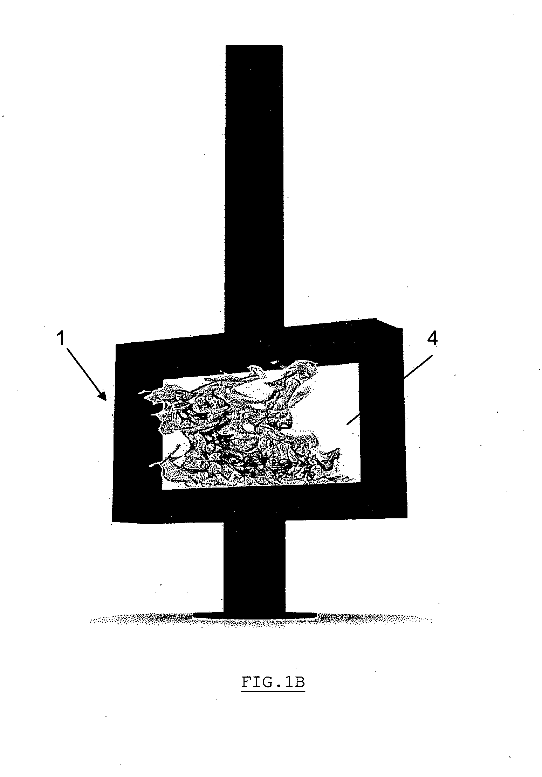

Par ailleurs, les appareils de chauffage domestique à combustible solide, liquide ou gazeux disponibles actuellement sur le marché sont de forme générale cubique, cylindrique, trapézoïdale, etc., qu'il s'agisse d'appareils autonomes (*stand alone*) ou insérés dans une maçonnerie ou un mur. Une manière de donner aux poêles actuels un design contemporain, avec un rappel d'objets de la vie quotidienne au goût du jour et « branchés » tels que téléviseurs à écran plat, *smartphones* ou tablettes électroniques, est de leur donner à la fois une profondeur faible, voire très faible, et un accès visuel sous différents angles, voire panoramique (FIG. 1A et 1B).

Cependant, la plupart des poêles disponibles sur le marché possèdent des dimensions se trouvant souvent dans les limites suivantes :
- hauteur : 35 - 120cm ;
- largeur : 30 - 100cm ;
- profondeur : 30 - 70cm.

Les dimensions précitées ainsi que les autres caractéristiques des poêles actuels donnent à ceux-ci généralement une apparence soit pesante, soit massive avec des surcoûts associés en matières, énergie et manutention.

Le poids de ces appareils peut être considérable et varier typiquement entre 40 et 250kg selon la puissance. Lorsqu'ils sont insérés, ces appareils requièrent une maçonnerie imposante.

La profondeur est un paramètre particulièrement important car elle détermine l'espace disponible pour la fixation de la porte ou de la vitre, et du dos du poêle, ainsi que la taille de la chambre de combustion.

Par exemple, il est difficile, dans le cas des poêles à bois, de réduire la profondeur du poêle vu la restriction de l'espace disponible pour l'insertion des bûches, celles-ci ayant tendance, lorsque la profondeur se réduit, ne fut-ce qu'à s'entasser les unes sur les autres dans le fond du poêle et à étouffer la combustion.

De manière générale, on observe que la combustion dans un espace étroit, en utilisant les systèmes de combustion de l'état de la technique n'est pas satisfaisante : le rendement est très moyen et la vitre se salit rapidement.

Jusqu'à la fin des années 70, les poêles à bois étaient alimentés par de l'air frais provenant de la grille dans le fond de la chambre, d'où une tendance à approfondir le poêle pour éviter les souillures de la vitre. Une autre solution était de supprimer les vitres, ou de les réduire ou de doter le poêle de vitres à décor en fonte pour cacher les salissures.

Une première façon de tenter de résoudre ce problème de souillures a été d'introduire de l'air frais le long de la vitre pour créer un rideau d'air qui empêche le dépôt des résidus de combustion et les éloigne vers l'arrière de la chambre. Cependant, l'introduction d'air froid ou à température ambiante dans une chambre de combustion portée entre 300 et 600°C perturbe la combustion et par suite le rendement n'est pas optimalisé et les émissions polluantes restent élevées.

Afin de résoudre ce problème, on a préchauffé en tout (hormis pendant la phase de démarrage) ou en partie l'air primaire introduit par contact avec les parois chaudes de la chambre dans des conduits secondaires, voire tertiaires, ce qui définit une deuxième et une troisième zone de combustion (voir par exemple le brevet « Woodbox »® - EP 1 563 228 B1, 100% air primaire préchauffé hors démarrage). Les poêles deviennent alors très complexes et très coûteux à fabriquer.

Comme la combustion s'effectue à plusieurs étages, les fumées croisant l'air entrant, l'ouverture de la porte pour le rechargement en combustible peut provoquer l'enfumage de la pièce d'habitation. Pour éviter cela, il faut améliorer le combustion en supprimant les entrées d'air parasites, donc en rendant la chambre la plus étanche possible, par exemple avec une porte de chargement en triple paroi, ce qui est à nouveau très coûteux.

Il est difficile également de réduire la profondeur des poêles de l'état de la technique sans diminuer le volume de la chambre de combustion de manière importante car un double conduit de préchauffage de l'air primaire est souvent ménagé dans le dos et les parois latérales de l'appareil, pour favoriser une bonne combustion.

Afin d'éviter des salissures importantes au niveau de la vitre, il est aussi nécessaire de brûler des essences de bois « nobles », c'est-à-dire coûteux, tels que chêne, hêtre, charme, bouleau par exemple.

Plusieurs fabricants ont essayé de donner à leurs appareils de chauffage un aspect « étroit » en ajoutant un cadre autour de l'appareil existant. La profondeur totale de ces appareils reste toutefois inchangée.

Par ailleurs, on connaît des appareils de chauffage fonctionnant au gaz dans lesquels le préchauffage de l'air primaire comprend une double enveloppe concentrique au conduit d'évacuation des gaz brûlés, ce qui permet de récupérer une partie de la chaleur perdue par l'évacuation des fumées pour préchauffer l'air primaire entrant.

Le document EP 1 985 928 A1 décrit un appareil de chauffage multi-combustible panoramique, où l'air primaire prélevé à l'extérieur de la chambre est préchauffé dans un conduit de double enveloppe, concentrique avec le conduit chaud d'évacuation des gaz brûlés. Un échangeur thermique situé dans le ciel de foyer sert à la fois de chicane pour freiner l'évacuation des gaz brûlés et de déflecteur qui contribue à distribuer tout l'air préchauffé le long de la (ou des) vitre(s), dans le haut de la chambre de combustion.

Les documents US 5113843 et US 5320086 sont également pertinents par rapport a l'objet de l'invention.

### Buts de l'invention

La présente invention vise à mettre sur le marché une nouvelle génération d'appareils de chauffage domestiques obéissant aux impératifs de haut rendement actuels et dont la profondeur est de préférence maximum 12 - 20cm, de manière à leur donner une apparence de poêle beaucoup plus contemporain.

L'invention a aussi pour but de fournir des appareils de chauffage dans lesquels la surface de vision du foyer est fortement augmentée par rapport à l'état de la technique.

L'invention a encore pour but de fournir des appareils rotatifs ou panoramiques afin d'assurer une vision optimale sur le foyer quelle que soit la position de l'utilisateur dans la pièce d'habitation.

L'invention vise encore à trouver une solution au problème d'échappement des fumées lors du rechargement par porte frontale.

### Principaux éléments caractéristiques de l'invention

La présente invention se rapporte à un appareil de chauffage à combustible solide comprenant une chambre de combustion munie d'une porte vitrée donnant sur l'extérieur, un dispositif d'admission d'air comburant extérieur dans ladite chambre, un conduit de sortie pour les gaz brûlés et une enveloppe étanche de préchauffage de l'air comburant acheminant ce dernier dans la chambre de combustion, connectée à une première extrémité au dispositif d'admission et se terminant à une seconde extrémité par une pluralité d'orifices libérant l'air préchauffé par l'enveloppe de préchauffage dans la chambre de combustion, l'enveloppe de préchauffage étant constituée d'un jeu de conduits étanches et échangeurs de chaleur avec les gaz de combustion et les gaz brûlés, se terminant par les orifices précités, caractérisé en ce que lesdits orifices sont disposés d'une part en lignes espacées les unes des autres et sont d'autre part de taille décroissante en hauteur, sur une distance ne dépassant pas la moitié inférieure de la hauteur de la chambre de combustion, de manière à moduler le débit d'air préchauffé libéré dans la chambre en enveloppant la zone de flamme et de combustion selon la forme conique naturelle de cette dernière, et en ce que le jeu de conduits étanches et échangeurs de chaleur avec les gaz de combustion et les gaz brûlés est agencé pour comporter une section de conduit de préchauffage de l'air comburant, concentrique avec au moins une section du conduit d'évacuation des gaz brulés et de longueur comprise entre 20 et 40 cm.

Selon des exemples de modes de réalisation de l'invention, éventuellement préférés, l'appareil de chauffage comporte en outre une ou une combinaison appropriée des caractéristiques suivantes :
- la section de conduit de préchauffage concentrique comporte un couvercle supérieur ou terminal et au moins deux cloisons radiales avec une ouverture entre l'extrémité de ces cloisons et le couvercle, pour créer au moins deux sections d'enveloppe cylindrique telles que l'air comburant se dirige de manière ascendante, ou dans un sens, dans une première desdites sections, longe le couvercle puis se dirige de manière descendante, ou dans le sens opposé, dans une autre desdites sections, en se réchauffant au contact thermique du conduit d'évacuation des gaz brulés ;
- la section de conduit de préchauffage concentrique comprend d'une part le dispositif d'admission de l'air comburant prélevé dans la pièce d'ambiance ou à l'extérieur de celle-ci ou de l'habitation et est relié d'autre part à une section de double enveloppe au niveau de côtés non vitrés de l'appareil pour acheminer l'air comburant de haut en bas tout en continuant à le préchauffer jusqu'à son admission dans le bas de la chambre de combustion par lesdits orifices ;
- dans le fond de la chambre de combustion, la section de double enveloppe est en outre en communication avec des tubes horizontaux, munis optionnellement de chenets également tubulaires, lesdits tubes et chenets (18) étant munis également munis d'orifices d'admission, en vue d'amener l'air préchauffé dans un lit de braises ;
- l'appareil de chauffage comprenant un dos et une face opposée vitrée, le dispositif d'admission de l'air comburant est situé dans le bas de la chambre de combustion et est relié à un conduit vertical de préchauffage situé dans le dos de l'appareil qui amène l'air comburant de façon ascendante vers ladite section de conduit de préchauffage concentrique, d'où l'air comburant est dirigé vers au moins une section de double enveloppe au niveau d'au moins un des deux côtés latéraux de l'appareil pour acheminer ensuite l'air comburant de façon descendante tout en continuant à le préchauffer jusqu'à son admission dans la chambre de combustion par lesdits orifices ;
- l'appareil comprend en outre une pluralité de conduits et de chicanes, pour augmenter la longueur du trajet des gaz brûlés et des fumées avant leur évacuation, en vue de diminuer la température des fumées et d'augmenter l'échange de chaleur avec l'air comburant ;
- l'appareil de chauffage comprenant deux faces opposées vitrées ou un dos et une face opposée vitrée, le dispositif d'admission de l'air comburant est situé dans le bas de la chambre de combustion et est relié, via un conduit de double fond étanche, à un ou plusieurs conduits verticaux de préchauffage situé aux angles respectifs de l'appareil et éventuellement à un conduit de préchauffage réalisé dans le dos de l'appareil, lesdits conduits amenant l'air comburant de façon ascendante vers ladite section de conduit de préchauffage concentrique, d'où l'air comburant est dirigé vers deux sections de double enveloppe au niveau des deux côtés latéraux respectifs de l'appareil pour acheminer ensuite l'air comburant de façon descendante tout en continuant à le préchauffer jusqu'à son admission dans la chambre de combustion par lesdits orifices, chacune des sections de double enveloppe étant éventuellement en position centrale entre les deux conduits verticaux ascendants respectifs ;
- le conduit de double fond étanche est une grille creuse comprenant une paroi inférieure munie d'un orifice d'entrée d'air comburant, d'une paroi supérieure fermée et en contact thermique avec la chambre de combustion, l'intérieur de la grille creuse comprenant des chicanes pour allonger le trajet de l'air comburant dans la grille creuse, des orifices traversant de part et d'autre de manière étanche la grille creuse pour permettre la chute des cendres dans un cendrier ;
- l'appareil est essentiellement de forme parallélépipédique, avec un rapport longueur/profondeur ou largeur/profondeur au moins supérieur à 3 et une surface vitrée couvrant au moins 70% de la face de plus grande superficie ;
- l'appareil comporte un accès sur sa partie supérieure sur au moins un côté du conduit d'évacuation des fumées ou sur au moins un de ses deux côtés latéraux, pour le chargement de bûches ou autres combustibles solides ;
- l'appareil comporte des moyens permettant de localiser des bûches à différentes hauteurs ;
- lesdits moyens sont des cornières ou des rails ;
- le conduit d'évacuation des gaz brûlés est prolongé dans le ciel de la chambre de combustion pour créer une section d'échangeur ou chicane rectangulaire, c'est-à-dire au moyen d'une plaque horizontale et de deux plaques verticales latérales, cette section d'échangeur permettant de canaliser les fumées et gaz de combustion, en captant ceux-ci à mi-hauteur de la chambre de combustion.

### Brève description des figures

La figure 1A représente une forme d'exécution d'un appareil de chauffage selon la présente invention, où la hauteur de l'appareil est supérieure à sa largeur.
La figure 1B représente une forme d'exécution d'un appareil de chauffage selon la présente invention, où la hauteur de l'appareil est inférieure à sa largeur.
La figure 2 représente une forme d'exécution de l'échangeur de chaleur dans un appareil de chauffage selon la présente invention.
La figure 3A représente une forme d'exécution de l'invention dans le cas où l'appareil présente deux vitres se faisant face et avec des conduits tubulaires d'admission d'air primaire préchauffé.
La figure 3B correspond à la forme d'exécution de la figure 3A où l'on montre la connexion des conduits tubulaires avec le bas de la chambre de combustion.
Les figures 4A à 4C représentent des vues d'une forme d'exécution de l'invention dans le cas où l'appareil présente une seule vitre et un dos lui faisant face avec une double paroi d'admission d'air préchauffé prolongeant l'échangeur.
Les figures 5A et 5B représentent des vues d'une forme d'exécution de l'invention dans le cas où l'appareil présente une seule vitre et un dos lui faisant face avec admission d'air comburant dans le bas de la chambre de combustion, montée de l'air dans un conduit central du dos jusque dans un échangeur concentrique avec une première section de la buse d'évacuation des gaz brûlés et redescente par des conduits latéraux avec alimentation en air préchauffé à la base de la combustion.
Les figures 6A à 6C représentent des vues d'une forme d'exécution de l'invention dans le cas où l'appareil présente deux vitres se faisant face, où l'air comburant est admis au niveau d'un échangeur concentrique avec une première section de la buse d'évacuation des gaz brûlés communiquant avec des conduits latéraux qui amènent l'air préchauffé de haut en bas à la base de la combustion (orifices verticaux, horizontaux et/ou chenets).
Les figures 7A à 7C représentent des vues d'une forme d'exécution de l'invention dans le cas où l'appareil présente deux vitres se faisant face, où l'air comburant est admis au niveau d'un double fond dans la chambre de combustion et puis acheminé verticalement par quatre conduits se situant aux angles de l'appareil jusque dans un échangeur concentrique avec une première section de la buse d'évacuation des gaz brûlés et avec redescente par des conduits centraux sur les côtés latéraux avec finalement alimentation à la base de la combustion.
Les figures 8A à 8C représentent des vues d'une grille creuse à chicanes permettant encore un préchauffage supplémentaire de l'air comburant dans la configuration des figures 7A à 7C.

### Description de formes d'exécution préférées de l'invention

La restriction imposée à un appareil de chauffage dont au moins une dimension est réduite, de préférence sa profondeur, par rapport à l'état de l'art est de maintenir un rendement optimal, pour une puissance donnée.

Cette condition peut être remplie en préchauffant l'air primaire de manière plus efficace pour augmenter la qualité de la combustion, sans qu'il n'y ait plus d'introduction directe d'air non préchauffé dans la chambre (saut pour « booster » la combustion pendant quelques secondes à l'allumage ou en phase d'extinction). En procédant à de nombreux essais, le Demandeur a découvert que pour optimaliser le rendement non seulement d'un poêle à profondeur réduite, mais encore d'un poêle de dimensions habituelles, il faut, en toute généralité :
- préchauffer au maximum l'air de combustion prélevé dans la pièce d'habitation, ou même à l'extérieur de cette dernière (air dit « primaire ») dans une zone confinée étanche appelée « enveloppe de préchauffage », et :
- diriger cet air préchauffé vers la base de la combustion, dans la partie inférieure de la chambre de combustion, grâce à un jeu de conduits étanches qui prolongent l'enveloppe de préchauffage ;
- moduler en hauteur le débit de l'air préchauffé, grâce à des jeux d'orifices de taille variable, de manière à envelopper ou encadrer la flamme ou la combustion selon sa forme conique naturelle.

Cette configuration entraîne une élimination optimale des imbrûlés et, dès lors, permet d'éviter de souiller la vitre et le conduit d'évacuation des fumées.

De manière pratique, les contraintes de la vision étendue ou panoramique recherchée selon l'invention imposent que l'arrivée de l'air de combustion, ainsi que le préchauffage de celui-ci, dans l'appareil de chauffage soient effectués selon un nombre relativement limité de modalités possibles :
- soit par le haut, via un échangeur de chaleur sis dans le ciel (ou dans la partie haute) du foyer, constitué par l'interface étanche entre d'une part une section de conduit centrale pour l'évacuation des gaz brûlés et d'autre part une enveloppe externe et concentrique à cette section centrale, l'enveloppe externe ayant pour fonction d'acheminer vers le bas l'air de combustion prélevé dans la pièce d'ambiance ou à l'extérieur de celle-ci ou de l'habitation, cet air de combustion étant ensuite canalisé de haut en bas sur de préférence toute la hauteur de la chambre de combustion, via un ou plusieurs conduits étanches, et libéré par des orifices adéquats dans la partie inférieure de la chambre de combustion, de préférence à la base de celle-ci, enveloppant ainsi d'air fortement réchauffé la zone conique constituée par les flammes et les gaz de combustion. La juxtaposition de l'échangeur de chaleur sis dans le ciel du foyer et des conduits étanches d'acheminement de l'air préchauffé jusqu'à à la base de la combustion constitue ce qui est appelé ci-dessus « enveloppe de préchauffage » ;
- soit par le bas, l'air comburant étant introduit dans le fond de l'appareil, ensuite préchauffé en utilisant une ou plusieurs sections de canalisation étanche, par exemple sous forme de double enveloppe, au niveau du fond, des deux côtés et/ou des angles de l'appareil, selon qu'il s'agit d'un appareil à simple ou double vitre, avec ensuite passage dans l'échangeur de chaleur précité au niveau du ciel du foyer, l'air préchauffé étant enfin de nouveau canalisé ou forcé à s'écouler de haut en bas dans l'appareil, de préférence sur toute la hauteur de la chambre de combustion pour être libéré au niveau des flammes, enveloppant ainsi à nouveau d'air fortement réchauffé les gaz de combustion.

Par la suite, on parlera indifféremment de vitre et porte vitrée.

Ces modalités d'alimentation en air préchauffé sont un préalable à la réalisation d'un appareil de chauffage de faible profondeur, comme cela est visé par la présente invention. On notera cependant que les principes à la base de l'invention sont également applicables à un appareil dont l'épaisseur est supérieure à 20 cm.

### EXEMPLE 1

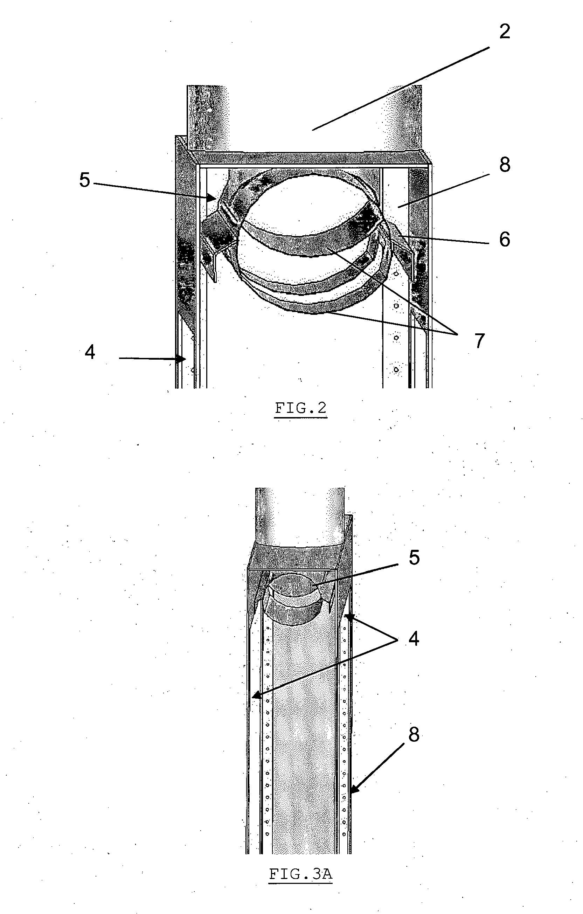

Selon une première modalité de réalisation de l'invention représentée à la FIG. 2, l'échangeur de chaleur 5 est situé, dans le ciel de la chambre de combustion, à l'endroit où le conduit de cheminée à double enveloppe 2, 3 entre en contact avec la chambre de combustion, c'est-à-dire à l'admission de l'air primaire acheminé de l'extérieur par le conduit 3, cet air primaire étant réchauffé au contact de la paroi chaude du conduit d'évacuation des fumées 2, à l'extérieur du poêle et au contact de l'échangeur 5, à l'intérieur du poêle. De par la présence de l'échangeur 5 et de sa configuration particulière, la température de l'air primaire préchauffé est donc plus élevée. L'échangeur 5 forme ainsi un tout avec ce double conduit 2, 3. L'échangeur 5 se comporte comme un obstacle ou un déflecteur qui va dévier l'air primaire arrivant dans la chambre de combustion dans le haut de l'appareil, de préférence au-dessus des flammes et de haut en bas sur toute la hauteur de la chambre de combustion, enveloppant ainsi d'air fortement réchauffé les gaz de combustion. Ceci entraîne une élimination optimale des imbrûlés et, dès lors, permet d'éviter de souiller la vitre et le conduit d'évacuation des fumées. Sa paroi externe 6 est de préférence convexe et courbe pour faciliter un écoulement fluide de l'air de combustion, mais cette paroi peut également être constituée de parties droites.

L'intérieur de l'échangeur 5 qui est en liaison avec l'évacuation des gaz brûlés dans l'enveloppe interne 2 du conduit à double enveloppe est avantageusement muni de sections constituant des chicanes 7 qui favorisent l'échange de chaleur avec l'enveloppe externe 3. Ces sections peuvent être courbes (par exemple, tôle d'acier) mais aussi droites si les matières utilisées ne sont pas formables (par exemple, vermiculite)

### EXEMPLE 2

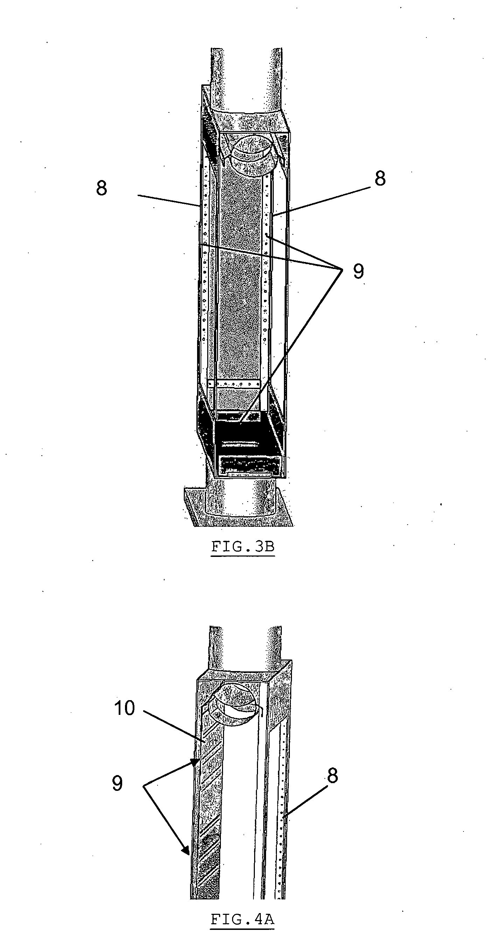

Selon une autre modalité de réalisation de l'invention représentée sur les FIG. 3A et 3B, le poêle est muni de deux vitres 4 se faisant face (poêle dit « réversible ») et on prévoit avantageusement quatre conduits tubulaires 8 correspondant aux quatre coins de la chambre de combustion en vue d'amener l'air préchauffé depuis l'échangeur 5 vers le bas de la chambre de combustion. Ces conduits tubulaires peuvent avoir une forme ronde, carrée ou toute autre forme géométrique. On peut prévoir sur toute la hauteur de ces conduits 8, et de préférence seulement dans la moitié inférieure de la chambre de combustion, des orifices 9 à répartir, de diamètres respectifs croissants en partant du bas, par exemple, à titre illustratif, 1cm, 0,75cm et 0,5cm respectivement. Sur une même ligne les orifices sont par exemple espacés de 2cm. Comme représenté sur la FIG. 3B, les quatre conduits 8 peuvent être reliés à la base 11 de la chambre de combustion, complètement ou partiellement, pour amener l'air préchauffé dans le lit de braises, en entourant complètement ce dernier, au moins dans la partie la plus basse de la chambre. Les orifices 9 peuvent également être remplacés par des ouvertures en lignes (ou fentes).

### EXEMPLE 3

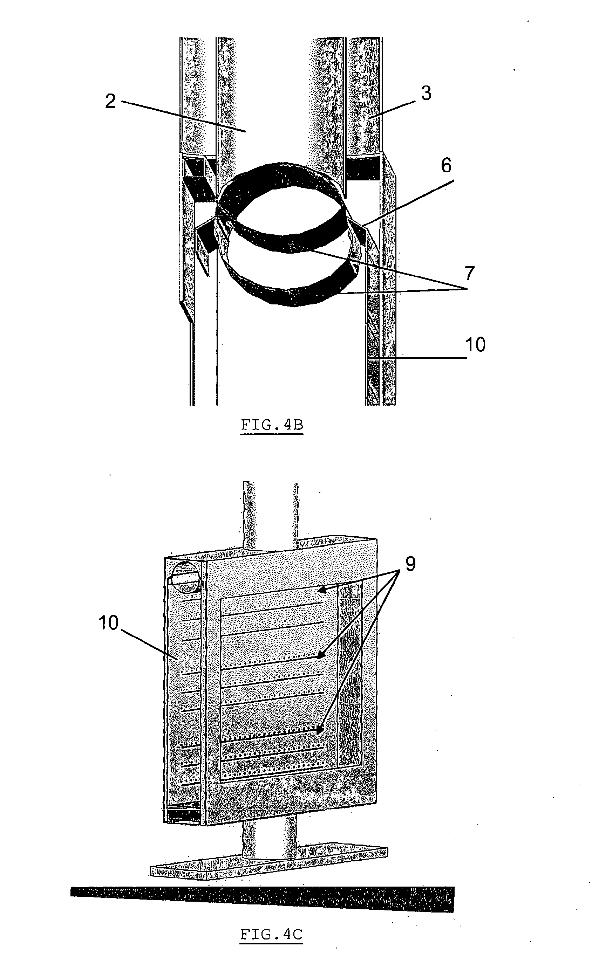

Selon une modalité alternative de réalisation de l'invention, pour les foyers à une seule vitre, comme représenté sur les FIG. 4A à 4C, on peut prolonger l'échangeur au dos non vitré de l'appareil au moyen d'une boîte ou plaque conductrice 10, par exemple en fonte. Celle-ci comportera avantageusement, par exemple, 3 rangées d'orifices 9 de 0,75cm dans le bas, 0,50cm au milieu et 0,25cm en haut, ces orifices étant par exemple espacés de 2,5cm et les rangées réparties sur la hauteur du dos 10. On a alors également une progressivité des ouvertures du haut vers le bas pour favoriser un bon acheminement de l'air de combustion ainsi préchauffé de manière optimale. A nouveau, ces ouvertures seront prévues de préférence dans la moitié inférieure du foyer.

### EXEMPLE 4

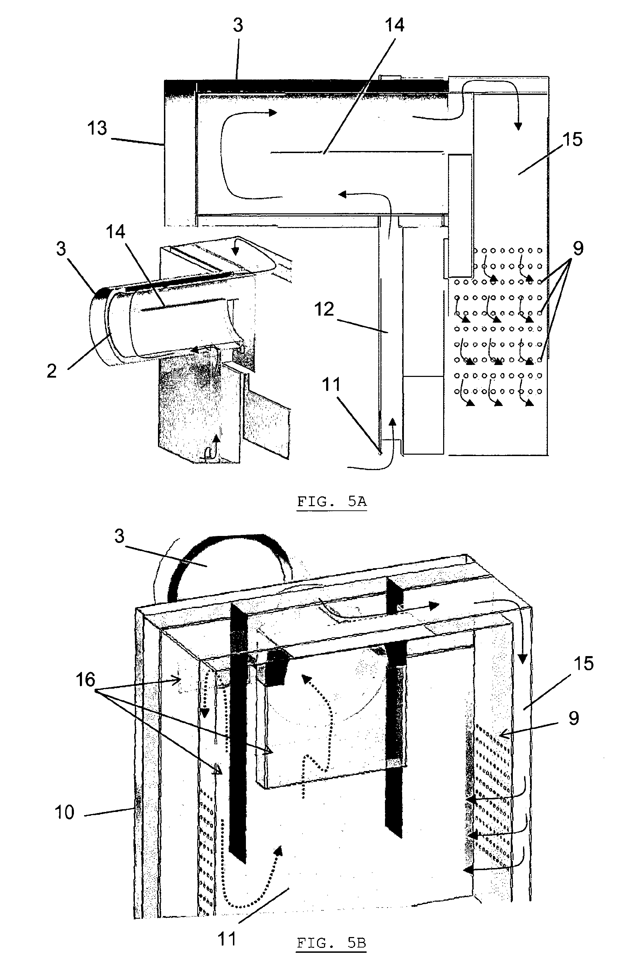

Selon une autre modalité de réalisation de l'invention représentée sur les FIG. 5A et 5B, dans le cas d'appareil à une seule vitre et pourvus d'un dos 10, l'air comburant est introduit par une ouverture centrale 11 se trouvant dans le fond de la chambre de combustion, de manière contrôlée, par exemple au moyen d'un registre automatisé soumis à une boucle de régulation. L'air comburant se réchauffe d'abord dans un conduit vertical 12, situé au dos de l'appareil, qui l'amène vers une chambre concentrique 3 avec le conduit d'évacuation des gaz brûlés 2. Contrairement au conduit d'acheminement de l'air comburant considéré dans les exemples 1 à 3 ci-dessus, ce conduit de double enveloppe 2 a une extension limitée, de préférence selon une longueur comprise entre 20 et 40 cm. Sur les figures 5A et 5B, ce conduit est représenté à l'arrière du poêle et perpendiculaire à la chambre, comme dans un poêle à ventouse, mais l'invention concerne également le cas où le conduit d'échappement des gaz brûlés est vertical.

Le conduit concentrique 3 précité permet d'augmenter sensiblement l'extension de l'enveloppe de préchauffage, donc la surface d'échange de chaleur entre les gaz brûlés et fumées d'une part, l'air comburant d'autre part. Ce conduit comporte un couvercle 13 et deux cloisons longitudinales 14 diamétralement opposées, mais ne s'étendant pas jusqu'au couvercle 13. Ainsi le parcours dans ce conduit 3 de l'air comburant se produit d'abord dans une première partie de la double enveloppe en demi-cylindre et ensuite, après avoir passé la zone jouxtant le couvercle, dans le second demi-cylindre.

L'air comburant de plus en plus réchauffé est ensuite acheminé de haut en bas dans une double enveloppe 15 située au niveau de chaque côté latéral de l'appareil de chauffage. Chacune des parois latérales de ces deux conduits 15 en contact avec la chambre de combustion est pourvue d'orifices 9 situés de préférence dans la moitié inférieure de la chambre de combustion. De préférence encore, ces orifices sont de diamètre décroissant en allant de bas en haut. En particulier, les orifices auront la forme de trous ou fentes, seront de préférence disposés en rangées horizontales situées à différentes hauteurs, la distance entre ces rangées étant éventuellement variable. Tous ces paramètres permettent de faire varier le flux d'air comburant.

Avantageusement, la chambre de combustion est encore pourvue de conduits et de chicanes 16, par exemple sous forme d'une triple paroi, pour le cheminement des gaz brûlés et des fumées (voir demande de brevet WO 2011/082936), ce qui permet un meilleur échange de chaleur entre ces fumées et l'air comburant à préchauffer.

Ainsi, de par la présence de l'échangeur de chaleur concentrique 3 à hauteur de la première partie du conduit d'évacuation des fumées 2, la température des fumées elles-mêmes et des conduits de fumées (soit en raccordement vertical, soit en raccordement arrière) est réduite ce qui augmente le rendement de l'appareil et l'air entrant dans la chambre de combustion est réchauffé davantage par rapport à la configuration sans échangeur d'admission, ce qui favorise d'autant la combustion tout en limitant les émissions polluantes.

La diminution des températures de fumées permet aussi avantageusement de réduire la distance entre l'appareil de chauffage et le mur contre lequel il est installé (clearance).

### EXEMPLE 5

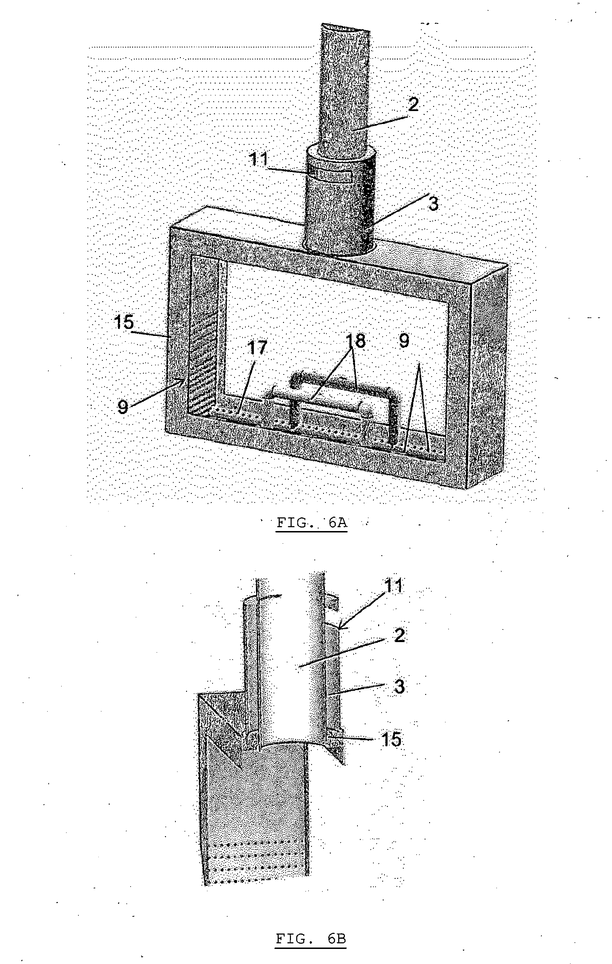

Selon encore une autre modalité de réalisation de l'invention, comme représenté sur les figures 6A et 6B, dans le cas d'un appareil à deux vitres se faisant face, l'air comburant est introduit par un orifice 11 pratiqué à une hauteur aisément accessible ou à portée de l'utilisateur dans l'échangeur de chaleur concentrique 3 au niveau de la première partie du conduit d'évacuation des gaz brûlés. Ici, l'échangeur de chaleur est vertical, la buse d'évacuation des fumées étant verticale alors que, dans l'exemple 4 ci-dessus, l'échangeur de chaleur est horizontal, la buse d'évacuation des fumées étant horizontale.

L'échangeur concentrique 3 est connecté à deux conduits en double paroi 15 descendant chacun le long d'un côté latéral de l'appareil (par opposition aux faces vitrées frontales).

Ainsi l'air préchauffé est acheminé jusque dans le fond de la chambre de combustion où il est libéré par plusieurs rangées d'orifices 9 situés de préférence dans la moitié inférieure de la chambre de combustion. De préférence encore, ces orifices sont de diamètre décroissant en allant de bas en haut. En variante, ces conduits latéraux communiquent dans le bas de la chambre avec deux conduits en forme de tubes 17, munis de chenets 18 pour le maintien des bûches de bois. Ces conduits tubulaires avec leurs chenets sont également pourvus d'orifices 9 pour la libération de l'air comburant préchauffé. L'idée d'entourer complètement le lit de braises par des orifices d'alimentation en air préchauffé, comme dans l'exemple 2, se retrouve aussi dans ce mode de réalisation. L'utilisation de chenets tubulaires munis d'orifices permet en outre de localiser ces orifices à différentes hauteurs devant la vitre, pour restituer au mieux le cône d'enveloppement d'air décrit plus haut.

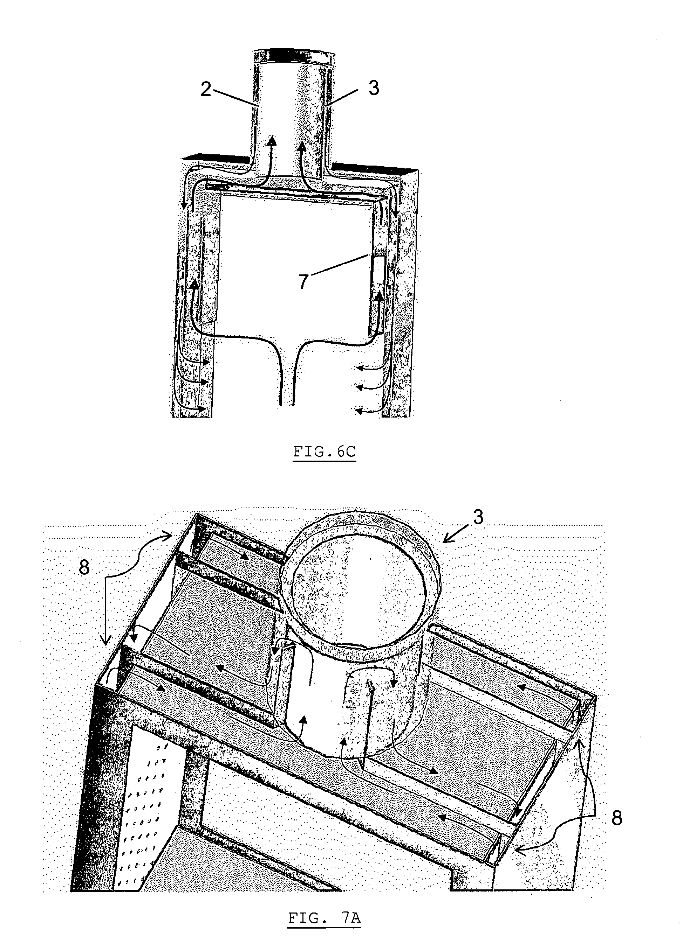

En variante illustrée sur la figure 6C, le conduit d'évacuation des gaz brûlés 2 est prolongé dans le ciel de la chambre de combustion pour créer une section d'échangeur ou chicane « rectangulaire » 7, c'est-à-dire au moyen d'une plaque horizontale et de deux plaques verticales, cette section d'échangeur permettant de canaliser les fumées et gaz de combustion, de préférence en captant ceux-ci à mi-hauteur de la chambre de combustion.

### EXEMPLE 6

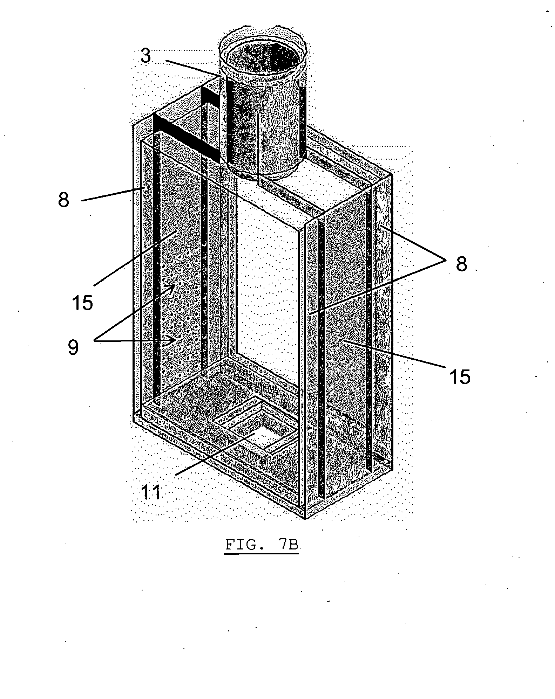

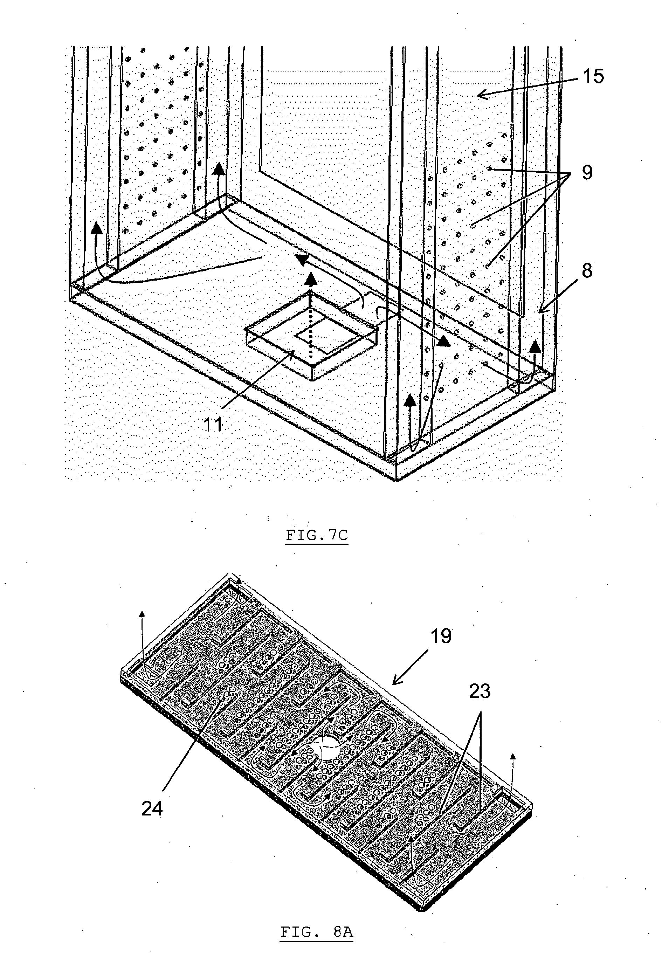

Selon encore une autre modalité de réalisation de l'invention, comme représenté sur les figures 7A à 7C, dans le cas d'un appareil à deux vitres se faisant face, l'air comburant est introduit sous la grille située dans le fond de l'appareil, puis, via un double-fond 19, acheminé dans quatre conduits verticaux 8 situés aux quatre coins ou angles de l'appareil. Ces quatre conduits 8 sont connectés avec l'échangeur de chaleur concentrique 3 à hauteur de la première partie du conduit d'évacuation des fumées 2 (voir ci-dessus dans l'exemple 4). A partir de là, l'air réchauffé par son trajet vertical dans les quatre conduits précités 8 et par son trajet dans l'échangeur de chaleur concentrique 3 est ensuite réacheminé vers le bas dans les deux parties latérales centrales 15, situées chacune entre deux des quatre conduits précités 8. Selon une variante, seulement une partie des conduits de coin (1 à 3 conduits) peut être utilisée pour le préchauffage de l'air.

Comme ci-dessus, chacune des deux parois de ces deux conduits latéraux centraux 15 en contact avec la chambre de combustion est pourvue d'orifices 9 situés de préférence dans la moitié inférieure de la chambre de combustion. De préférence encore, ces orifices 9 sont de diamètre décroissant en allant de bas en haut.

On notera que, si l'appareil comporte une seule vitre, le dos de l'appareil peut également être utilisé en conduit de préchauffage, éventuellement en plus d'un ou plusieurs des conduits de coin, pour acheminer de bas en haut et préchauffer l'air comburant.

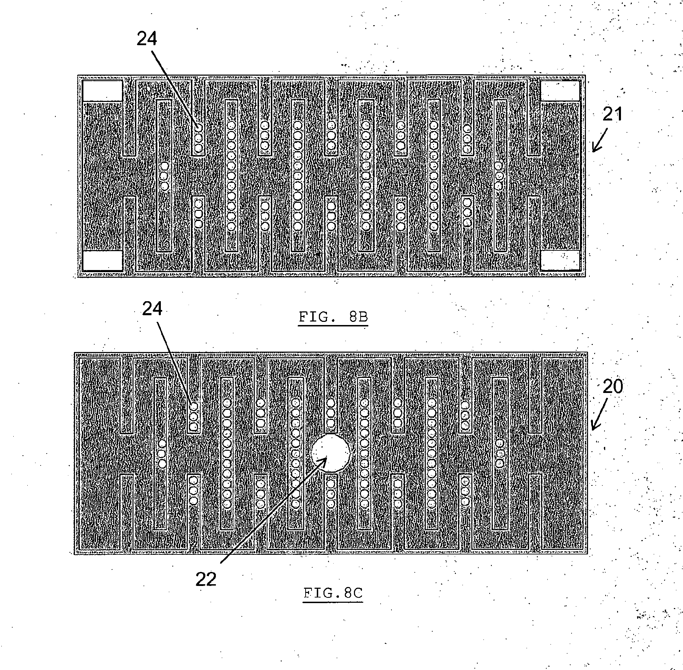

Avantageusement, comme représenté en variante sur les figures 8A à 8C, l'air entrant peut d'abord être préchauffé dans une grille creuse située dans le fond de la chambre au-dessus du cendrier (non représenté), dont la paroi inférieure 20 est munie d'un orifice 22 d'entrée d'air extérieur et la paroi supérieure 21 fermée est en contact thermique avec la chambre de combustion. La grille creuse 19 est muni de chicanes 23 visant à allonger le trajet de l'air comburant à l'intérieur de celle-ci, et donc à augmenter l'échange thermique. La grille creuse 19 est pourvue d'orifices 24 la traversant de part en part, de manière étanche, de sorte que les cendres peuvent la traverser et tomber dans le cendrier, sans contact avec l'air de combustion.

Les avantages de la configuration selon l'invention sont, à puissance inchangée, que l'espace et les matières premières requis pour la fabrication sont fortement réduits (jusqu'à 50%), de même que la manutention requise. Pour les foyers insérés, on pourra également prévoir beaucoup moins de maçonnerie.

### EXEMPLE 7

Selon une variante complémentaire de l'invention, le chargement des bûches de bois peut être effectué, dans le cas d'un poêle autonome selon l'invention, à partir du haut de chaque côté du conduit d'évacuation des fumées ou à partir des deux côtés du poêle (non représenté). Ces dispositions de chargement vont permettre de supprimer la nécessité d'ouvrir la porte vitrée pour le chargement. Celle-ci devra seulement être ouverte lorsque le poêle n'est plus en fonctionnement et bien refroidi, pour les besoins du nettoyage ou de l'entretien de la vitre. En utilisation, la vitre va rester propre même à bas régime du fait que l'air de combustion est fortement préchauffé et enveloppe littéralement les gaz de combustion. On a également constaté que, grâce à cette combustion fortement améliorée, il est possible, au moyen du poêle selon l'invention, de brûler des résineux tels que le sapin, qui est au moins de moitié moins cher que le bois noble.

Lorsqu'il est inséré dans une maçonnerie, l'appareil de chauffage selon l'invention va, en variante, également permettre le chargement de bûches de bois par les côtés du poêle, par exemple grâce à un montage pivotant du corps de chauffe.

Vu la très faible épaisseur prévue pour la chambre de combustion (par exemple 12 - 20cm), il est nécessaire de prévoir un moyen de localiser les bûches de bois en hauteur, par exemple au moyen de rails, cornières, etc. (non représenté). En effet, ceci permet d'éviter que, les bûches se collent contre la ou les vitres de l'appareil de chauffage.

### EXEMPLE 8

Selon une variante encore complémentaire de l'invention, le problème de l'échappement de fumée à l'ouverture de porte peut être résolu, tout en évitant le chargement latéral décrit ci-dessus, en optant pour une simple chicane en vermiculite (non représentée) qui obture le ciel de foyer sur toute sa longueur et à l'exception de sa partie arrière : les flammes sont attirées à l'arrière du foyer et les fumées ne s'échappent pas par la porte vitrée lors de son ouverture. Si le poêle est doté de deux vitres, la chicane sera avantageusement coulissante et sera éventuellement déplacée au moment où l'on souhaite ouvrir une des portes pour nettoyer la vitre par exemple.

### EXEMPLE 9

Selon une variante encore complémentaire de l'invention, le poêle peut alternativement être équipé d'une admission supplémentaire d'air située dans le fond de l'appareil. Celle-ci peut s'avérer particulièrement utile pour amplifier le feu ou accélérer la combustion des braises qui s'accumulent à la fin du cycle de combustion du bois. Dans le but de permettre une accumulation rationnelle des cendres, la partie inférieure du poêle est aveugle. Afin d'éviter que les cendres se répandent sur la vitre, il est important que la vitre et le volume aveugle soient dans le prolongement l'un de l'autre. Dans cette partie inférieure, ou sous celle-ci, se trouve éventuellement un cendrier qui permet de retirer les cendres générées par la combustion (non représenté).

Avantageusement, le cendrier disposé dans la partie inférieure du poêle sera recouvert de quelques traverses ou d'une grille. Le papier et le petit bois d'allumage pourront alors être disposés dans le cendrier, la première bûche étant ensuite placée sur ces traverses ou cette grille. Le cendrier peut être également muni avantageusement d'un orifice pour adapter un aspirateur de cendres (non représenté).

Un autre avantage que l'on peut mentionner pour la présente invention se rapporte aux variantes de poêles avec échangeur pour production d'eau chaude. Avec l'appareil de l'invention, la combustion est achevée au moment où les gaz de combustion entrent en contact avec la poche d'eau ou les tubes d'eau situés dans le ciel du foyer. Ainsi, la masse « froide » constituée par la poche d'eau (à moins de 100°C) ne vient pas perturber la combustion (par exemple à environ 400°C), comme dans les appareils de l'état de la technique, où une bonne partie de la combustion se déroule dans le ciel du foyer.

Un autre avantage encore de l'invention est lié à l'alimentation en air préchauffé exclusivement par le faut de l'appareil. Lors de l'alimentation en air comburant selon l'état de la technique uniquement par le bas, sans rechargement, la combustion s'éteint au bout d'un temps assez limité. Lors de l'alimentation en air comburant selon l'état de la technique à la fois par le bas (air primaire) et par le haut (air secondaire préchauffé), la durée de la combustion est plus longue et il est conseillé à l'utilisateur de mettre l'appareil au ralenti pour allonger la durée de la combustion. Dans les faits, l'utilisateur règle souvent sur ralenti beaucoup trop vite ce qui cause l'encrassement de la vitre. L'alimentation en air comburant préchauffé uniquement par le haut, selon l'invention, n'épuise pas le lit de braises, puisqu'aucun air ne le traverse. Celui-ci subsiste donc beaucoup plus longtemps et un réglage de ralenti n'est plus nécessaire.

### Symboles de référence

- 1: appareil de chauffage
- 2: conduit d'évacuation des gaz brûlés
- 3: conduit concentrique de préchauffage de l'air primaire
- 4: vitre
- 5: échangeur de chaleur à l'admission d'air
- 6: surface externe de l'échangeur
- 7: chicane(s)
- 8: conduits tubulaires verticaux
- 9: orifice d'admission d'air préchauffé
- 10: dos
- 11: dispositif d'admission d'air comburant
- 12: conduit de préchauffage vertical (ascendant)
- 13: couvercle de conduit concentrique de préchauffage
- 14: cloison de conduit concentrique de préchauffage
- 15: conduit de préchauffage vertical (descendant)
- 16: conduits et chicanes pour les gaz brûlés
- 17: conduits tubulaires horizontaux
- 18: chenets
- 19: grille creuse
- 20: paroi inférieure de grille creuse
- 21: paroi supérieure de grille creuse
- 22: orifice de grille
- 23: chicanes de grille
- 24: orifices pour cendres

## Revendications

1. Appareil de chauffage (1) à combustible solide comprenant une chambre de combustion munie d'une porte vitrée (4) donnant sur l'extérieur, un dispositif d'admission (11) d'air comburant extérieur dans ladite chambre, un conduit de sortie pour les gaz brûlés (2) et une enveloppe étanche de préchauffage de l'air comburant acheminant ce dernier dans la chambre de combustion, connectée à une première extrémité au dispositif d'admission (11) et se terminant à une seconde extrémité par une pluralité d'orifices (9) libérant l'air préchauffé par l'enveloppe de préchauffage dans la chambre de combustion, l'enveloppe de préchauffage étant constituée d'un jeu de conduits étanches et échangeurs de chaleur avec les gaz de combustion et les gaz brûlés (3, 8, 12, 15, 17, 18, 19), se terminant par les orifices précités (9), **caractérisé en ce que** lesdits orifices (9) sont d'une part disposés en lignes espacées les unes des autres et sont d'autre part de taille décroissante en hauteur, sur une distance ne dépassant pas la moitié inférieure de la hauteur de la chambre de combustion, de manière à moduler le débit d'air préchauffé libéré dans la chambre en enveloppant la zone de flamme et de combustion selon la forme conique naturelle de cette dernière, et **en ce que** le jeu de conduits étanches et échangeurs de chaleur avec les gaz de combustion et les gaz brûlés est agencé pour comporter une section de conduit de préchauffage (3) de l'air comburant, concentrique avec au moins une section du conduit d'évacuation des gaz brulés (2) et de longueur comprise entre 20 et 40 cm.

2. Appareil de chauffage selon la revendication 1, **caractérisé en ce que** la section de conduit de préchauffage concentrique (3) comporte un couvercle supérieur ou terminal (13) et au moins deux cloisons radiales (14) avec une ouverture entre l'extrémité de ces cloisons et le couvercle, pour créer au moins deux sections d'enveloppe cylindrique telles que l'air comburant se dirige de manière ascendante, ou dans un sens, dans une première desdites sections, longe le couvercle puis se dirige de manière descendante, ou dans le sens opposé, dans une autre desdites sections, en se réchauffant au contact thermique du conduit d'évacuation des gaz brulés (2).

3. Appareil de chauffage selon la revendication 1, **caractérisé en ce que** la section de conduit de préchauffage concentrique (3) comprend d'une part le dispositif d'admission de l'air comburant (11) prélevé dans la pièce d'ambiance ou à l'extérieur de celle-ci ou de l'habitation et est relié d'autre part à une section de double enveloppe (15) au niveau de côtés non vitrés de l'appareil pour acheminer l'air comburant de haut en bas tout en continuant à le préchauffer jusqu'à son admission dans le bas de la chambre de combustion par lesdits orifices (9).

4. Appareil de chauffage selon la revendication 3, **caractérisé en ce que**, dans le fond de la chambre de combustion, la section de double enveloppe (15) est en outre en communication avec des tubes horizontaux (17), munis optionnellement de chenets (18) également tubulaires, lesdits tubes (17) et chenets (18) étant munis également munis d'orifices d'admission (9), en vue d'amener l'air préchauffé dans un lit de braises.

5. Appareil de chauffage selon la revendication 1, comprenant un dos (10) et une face opposée vitrée (4), **caractérisé en ce que** le dispositif d'admission de l'air comburant (11) est situé dans le bas de la chambre de combustion et est relié à un conduit vertical (12) de préchauffage situé dans le dos (10) de l'appareil qui amène l'air comburant de façon ascendante vers ladite section de conduit de préchauffage concentrique (3), d'où l'air comburant est dirigé vers au moins une section de double enveloppe (15) au niveau d'au moins un des deux côtés latéraux de l'appareil pour acheminer ensuite l'air comburant de façon descendante tout en continuant à le préchauffer jusqu'à son admission dans la chambre de combustion par lesdits orifices (9).

6. Appareil de chauffage selon la revendication 5, **caractérisé en ce que** l'appareil comprend en outre une pluralité de conduits et de chicanes (16), pour augmenter la longueur du trajet des gaz brûlés et des fumées avant leur évacuation, en vue de diminuer la température des fumées et d'augmenter l'échange de chaleur avec l'air comburant.

7. Appareil de chauffage selon la revendication 1, comprenant deux faces opposées vitrées (4) ou un dos (10) et une face opposée vitrée (4), **caractérisé en ce que** le dispositif d'admission de l'air comburant (11) est situé dans le bas de la chambre de combustion et est relié, via un conduit de double fond étanche (19), à un ou plusieurs conduits verticaux (8) de préchauffage situé aux angles respectifs de l'appareil et éventuellement à un conduit de préchauffage réalisé dans le dos (10) de l'appareil, lesdits conduits amenant l'air comburant de façon ascendante vers ladite section de conduit de préchauffage concentrique (3), d'où l'air comburant est dirigé vers deux sections de double enveloppe (15) au niveau des deux côtés latéraux respectifs de l'appareil pour acheminer ensuite l'air comburant de façon descendante tout en continuant à le préchauffer jusqu'à son admission dans la chambre de combustion par lesdits orifices (9), chacune des sections de double enveloppe (15) étant éventuellement en position centrale entre deux conduits verticaux (8) ascendants respectifs.

8. Appareil de chauffage selon la revendication 7, **caractérisé en ce que** le conduit de double fond étanche (9) est une grille creuse comprenant une paroi inférieure (20) munie d'un orifice (22) d'entrée d'air comburant, d'une paroi supérieure (21) fermée et en contact thermique avec la chambre de combustion, l'intérieur de la grille creuse comprenant des chicanes (23) pour allonger le trajet de l'air comburant dans la grille creuse, des orifices (24) traversant de part et d'autre de manière étanche la grille creuse pour permettre la chute des cendres dans un cendrier.

9. Appareil de chauffage selon la revendication 1, **caractérisé en ce que** l'appareil est essentiellement de forme parallélépipédique, avec un rapport longueur/profondeur ou largeur/profondeur au moins supérieur à 3 et une surface vitrée couvrant au moins 70% de la face de plus grande superficie.

10. Appareil de chauffage selon la revendication 1, **caractérisé en ce que** l'appareil comporte un accès sur sa partie supérieure sur au moins un côté du conduit d'évacuation des fumées ou sur au moins un de ses deux côtés latéraux, pour le chargement de bûches ou autres combustibles solides.

11. Appareil de chauffage selon la revendication 10, **caractérisé en ce que** l'appareil comporte des moyens permettant de localiser des bûches à différentes hauteurs.

12. Appareil de chauffage selon la revendication 11, **caractérisé en ce que** lesdits moyens sont des cornières ou des rails.

13. Appareil de chauffage selon la revendication 1, **caractérisé en ce que** le conduit d'évacuation des gaz brûlés (2) est prolongé dans le ciel de la chambre de combustion pour créer une section d'échangeur ou chicane rectangulaire (7), c'est-à-dire au moyen d'une plaque horizontale et de deux plaques verticales latérales, cette section d'échangeur (7) permettant de canaliser les fumées et gaz de combustion, en captant ceux-ci à mi-hauteur de la chambre de combustion.

## Patentansprüche

1. Heizvorrichtung (1) für Festbrennstoff, die eine Brennkammer mit einer nach außen führenden verglasten Tür (4), eine Zufuhrvorrichtung (11) von Verbrennungsluft von außen in die Kammer, eine Ausgangsleitung für die verbrannten Gase (2) und einen dichten Vorwärmmantel der Verbrennungsluft umfasst, der diese in die Brennkammer leitet, der an einem ersten Ende mit der Zufuhrvorrichtung (11) verbunden ist und an einem zweiten Ende mittels einer Vielzahl von Öffnungen (9) endet, die die von dem Vorwärmmantel vorgewärmte Luft in der Brennkammer freisetzen, wobei der Vorwärmmantel aus einem Set dichter Leitungen und Wärmetauscher mit den Verbrennungsgasen und den verbrannten Gasen (3, 8, 12, 15, 17, 18, 19) besteht, die mittels der vorgenannten Öffnungen (9) enden, **dadurch gekennzeichnet, dass** die Öffnungen (9) einerseits in voneinander beabstandeten Linien angeordnet sind und andererseits über eine Distanz, die nicht die untere Hälfte der Höhe der Brennkammer überschreitet, gemäß der Höhe abnehmender Größe sind, um den Durchsatz vorgewärmter Luft, die bei Ummantelung der Flammen- und Verbrennungszone gemäß der natürlichen konischen Form in die Kammer freigesetzt wird, zu modulieren, und dass das Set dichter Leitungen und Wärmetauscher mit den Verbrennungsgasen und den verbrannten Gasen ausgebildet ist, um einen Vorheizungsleitungsquerschnitt (3) der Verbrennungsluft aufzuweisen, die mit mindestens einem Querschnitt der Ableitungsleitung der verbrannten Gase (2) identisch ist und eine Länge zwischen 20 und 40 cm inklusive hat.

2. Heizvorrichtung nach Anspruch 1, **dadurch gekennzeichnet, dass** der konzentrische Vorheizungsleitungsquerschnitt (3) einen oberen oder abschließenden Deckel (13) und mindestens zwei radiale Trennwände (14) mit einer Öffnung zwischen dem Ende dieser Trennwände und dem Deckel aufweist, um mindestens zwei zylindrische Mantelquerschnitte zu schaffen, so dass die Verbrennungsluft aufsteigend geleitet wird oder, in einer Richtung, in einen ersten der Querschnitte, am Deckel vorbei und dann absteigt, oder in entgegengesetzter Richtung, in einen anderen der Querschnitte, wo sie sich im thermischen Kontakt mit der Ableitungsleitung der verbrannten Gase (2) erwärmt.

3. Heizvorrichtung nach Anspruch 1, **dadurch gekennzeichnet, dass** der konzentrische Vorheizungsleitungsquerschnitt (3) einerseits die Zufuhrvorrichtung der aus dem umgebenden Raum oder außerhalb desselben oder der Wohnung entnommenen Verbrennungsluft (11) umfasst und andererseits mit einem Doppelmantelquerschnitt (15) im Bereich nicht verglaster Seiten der Vorrichtung verbunden ist, um die Verbrennungsluft von oben nach unten zu leiten und sie dabei weiter bis zu ihrem Eintritt unten in die Brennkammer durch die Öffnungen (9) vorzuwärmen.

4. Heizvorrichtung nach Anspruch 3, **dadurch gekennzeichnet, dass**, auf dem Boden der Brennkammer, der Doppelmantelquerschnitt (15) ferner in Kommunikation mit horizontalen Rohren (17) ist, die optional mit ebenfalls rohrförmigen Kaminböcken (18) ausgestattet sind, wobei die Rohre (17) und Kaminböcke (18) ebenfalls mit Zufuhröffnungen (9) ausgestattet sind, um vorgewärmte Luft in ein Glutbett zu führen.

5. Heizvorrichtung nach Anspruch 1, die eine Rückseite (10) und eine gegenüberliegende verglaste Seite (4) umfasst, **dadurch gekennzeichnet, dass** sich die Zufuhrvorrichtung der Verbrennungsluft (11) unten in der Brennkammer befindet und mit einer vertikalen Vorwärmleitung (12) verbunden ist, die sich auf der Rückseite (10) der Vorrichtung befindet, die die Verbrennungsluft aufsteigend zum konzentrischen Vorheizungsleitungsquerschnitt (3) führt, von wo die Verbrennungsluft zu mindestens einem Doppelmantelquerschnitt (15) im Bereich einer der zwei seitlichen Seiten der Vorrichtung geleitet wird, um danach die Verbrennungsluft absteigend zu leiten und sie dabei weiter bis zu ihrem Eintritt in die Brennkammer durch die Öffnungen (9) vorzuwärmen.

6. Heizvorrichtung nach Anspruch 5, **dadurch gekennzeichnet, dass** die Vorrichtung ferner eine Vielzahl von Leitungen und Hindernisse (16) umfasst, um die Länge des Wegs der verbrannten Gase und der Rauchgase vor ihrer Ableitung zu verlängern, um die Temperatur der Rauchgase zu verringern und den Wärmeaustausch mit der Verbrennungsluft zu erhöhen.

7. Heizvorrichtung nach Anspruch 1, die zwei gegenüberliegende verglaste Seiten (4) oder eine Rückseite (10) und eine gegenüberliegende verglaste Seite (4) umfasst, **dadurch gekennzeichnet, dass** sich die Zufuhrvorrichtung der Verbrennungsluft (11) unten in der Brennkammer befindet und über eine dichte Doppelbodenleitung (19) mit einer oder mehreren vertikalen Vorwärmleitungen (8) verbunden ist, die sich an den jeweiligen Ecken der Vorrichtung befinden und eventuell mit einer in der Rückseite (10) der Vorrichtung ausgebildeten Vorwärmleitung, wobei die Leitungen die Verbrennungsluft aufsteigend zum konzentrischen Vorheizungsleitungsquerschnitt (3) führen, von wo die Verbrennungsluft zu zwei Doppelmantelquerschnitten (15) im Bereich der jeweiligen zwei seitlichen Seiten der Vorrichtung geleitet wird, um danach die Verbrennungslust absteigend zu leiten und sie dabei weiter bis zu ihrem Eintritt in die Brennkammer durch die Öffnungen (9) vorzuwärmen, wobei jeder der Doppelmantelquerschnitte (15) eventuell in zentraler Position zwischen zwei jeweiligen aufsteigenden vertikalen Leitungen (8) ist.

8. Heizvorrichtung nach Anspruch 7, **dadurch gekennzeichnet, dass** die dichte Doppelbodenleitung (9) ein Hohlgitter ist, das eine untere Wand (20), ausgestattet mit einer Verbrennungslufteingangsöffnung (22), eine obere geschlossene Wand (21) im thermischen Kontakt mit der Brennkammer umfasst, wobei das Innere des Hohlgitters Hindernisse (23) umfasst, um den Weg der Verbrennungsluft im Hohlgitter zu verlängern, wobei Öffnungen (24) das Hohlgitter von der einen und der anderen Seite dicht durchqueren, um das Herunterfallen der Asche in einen Aschekasten zu erlauben.

9. Heizvorrichtung nach Anspruch 1, **dadurch gekennzeichnet, dass** die Vorrichtung im Wesentlichen parallelepipedisch geformt ist mit einem Länge-Tiefe- oder Breite-Tiefe-Verhältnis mindestens über 3 und einer verglasten Fläche, die mindestens 70 % der Seite mit der größten Oberfläche bedeckt.

10. Heizvorrichtung nach Anspruch 1, **dadurch gekennzeichnet, dass** die Vorrichtung einen Zugang auf ihrem oberen Teil auf mindestens einer Seite der Rauchgasableitungsleitung oder auf mindestens einer ihrer zwei seitlichen Seiten für die Beladung mit Holzscheiten oder anderen festen Brennstoffen aufweist.

11. Heizvorrichtung nach Anspruch 10, **dadurch gekennzeichnet, dass** die Vorrichtung Mittel aufweist, die erlauben, Holzscheite in verschiedenen Höhen zu lokalisieren.

12. Heizvorrichtung nach Anspruch 11, **dadurch gekennzeichnet, dass** die Mittel Eckpfosten oder Schienen sind.

13. Heizvorrichtung nach Anspruch 1, **dadurch gekennzeichnet, dass** die Ableitungsleitung der Verbrennungsgase (2) in den Himmel der Brennkammer verlängert ist, um eine Austauschquerschnitt oder ein rechteckiges Hindernis (7) zu schaffen, das heißt mit einer horizontalen Platte und zwei vertikalen Seitenplatten, wobei dieser Austauschquerschnitt (7) erlaubt, den Rauch- und Verbrennungsgase zu kanalisieren, indem diese in halber Höhe der Brennkammer abgefangen werden.

## Claims

1. A solid-fuel heating apparatus (1) comprising a combustion chamber provided with a windowed door (4) opening to the outside, an intake device (11) for receiving outside combustion air in said chamber, an output duct (2) for the burnt gases and a sealed enclosure for preheating the combustion air conveying the latter into the combustion chamber, connected at a first end to the intake device (11) and ending at a second end with a plurality of orifices (9) releasing the air preheated through the preheating enclosure into the combustion chamber, the preheating enclosure being made up of a set of sealed ducts exchanging heat with the combustion gases and the burnt gases (3,8,12,15,17,18,19), ending with the aforementioned orifices (9), wherein said orifices (9) are on the one hand positioned in lines spaced apart from one another and on the other hand have a size decreasing by height, over a distance that does not exceed the lower half of the height of the combustion chamber, so as to modulate the flow of preheated air released into the chamber while enveloping the flame and combustion area according to the natural conical shape of the latter, and wherein the set of sealed ducts exchanging heat with the combustion gases and the burnt gases is arranged to comprise a duct section (3) for preheating the combustion air that is concentric with at least one section of the discharge duct for the burnt gases (2) and has a length comprised between 20 and 40 cm.

2. The heating apparatus as in Claim 1, wherein the concentric section of the preheating duct (3) comprises an upper or end lid (13) and at least two radial partitions (14) with an opening between the end of those partitions and the lid, to create at least two cylindrical enclosure sections such that the combustion air is oriented upwards, or in one direction, in a first of said sections, runs alongside the lid, then is oriented downward, or in the opposite direction, in another of said sections, while heating in thermal contact with the discharge duct (2) for the burnt gases.

3. The heating apparatus as in Claim 1, wherein the concentric section (3) of the preheating duct on the one hand comprises the intake device for the combustion air (11) taken from the ambient room or outside the latter or the residence and is connected on the other hand to a dual-enclosure section (15) at the level of non-windowed sides of the apparatus to convey the combustion air from top to bottom while continuing to preheat it until it is taken in at the bottom of the combustion chamber by said orifices (9).

4. The heating apparatus as in Claim 3, wherein, in the bottom of the combustion chamber, the dual-enclosure section (15) is further connected to horizontal tubes (17), optionally provided with fire-dogs (18) that are also tubular, said tubes (17) and fire-dogs (18) also being provided with intake orifices (9), in order to bring the preheated air into an ember bed.

5. The heating apparatus as in Claim 1, comprising a back (10) and a opposite windowed face (4), wherein the intake device for the combustion air (11) is situated in the bottom of the combustion chamber and is connected to a vertical preheating duct (12) situated in the back (10) of the apparatus that brings in the combustion air upwards toward said concentric section of the preheating duct (3), from which the combustion air is oriented toward at least one dual-enclosure section (15) at the level of at least one of the two lateral sides of the apparatus to next convey the combustion air downwards while continuing to preheat it until it is taken in the combustion chamber through said orifices (9).

6. The heating apparatus as in Claim 5, wherein the apparatus further comprises a plurality of ducts and baffles (16), to increase the length of the path taken by the burnt gases and smoke before they are discharged, in order to decrease the temperature of the smoke and increase the heat exchange with the combustion air.

7. The heating apparatus as in Claim 1, comprising two opposite windowed faces (4) or a back (10) and an opposite windowed face (4), wherein the intake device for the combustion air (11) is situated in the bottom of the combustion chamber and is connected, via a sealed dual-bottom duct (19), to one or several vertical preheating ducts (8) situated at respective corners of the apparatus and optionally to a preheating duct formed in the back (10) of the apparatus, said ducts bringing in the combustion air upwards toward said concentric section of the preheating duct (3) from which the combustion air is oriented toward two dual-enclosure sections (15) at the level of the two respective lateral sides of the apparatus to next convey the combustion air downwards while continuing to preheat it until it is taken into the combustion chamber through said orifices (9), each of the dual-enclosure sections (15) optionally being in a central position between two respective rising vertical ducts (8).

8. The heating apparatus as in Claim 7, wherein the sealed dual-bottom duct (9) is a hollow grate comprising a lower wall (20) provided with an intake orifice (22) for the combustion air, a closed upper wall (21) in thermal contact with the combustion chamber, the inside of the hollow grate comprising baffles (23) to lengthen the path of the combustion air in the hollow grate, orifices (24) passing all the way through the hollow grate in a sealed manner in order to allow the ashes to fall into an ash pan.

9. The heating apparatus as in Claim 1, wherein the apparatus has an essentially parallelepiped shape, with a length/depth or width/depth ratio at least greater than 3 and a windowed surface covering at least 70% of the face with the larger surface area.

10. The heating apparatus as in Claim 1, wherein the apparatus comprises an access on its upper part over at least one side of the smoke-discharge duct or on at least one of its two lateral sides, for loading logs or other solid fuels.

11. The heating apparatus as in Claim 10, wherein the apparatus comprises means allowing to position logs at different heights.

12. The heating apparatus as in Claim 11, wherein said means are angle brackets or rails.

13. The heating apparatus as in Claim 1, wherein the discharge duct (2) for the burnt gases is extended in the crown of the combustion chamber to create a rectangular exchanger or baffle section (7), i.e., using a horizontal plate and two vertical side plates, this exchanger section (7) allowing to channel the smoke and combustion gases, by capturing them at mid-height of the combustion chamber.
